# EUROPEAN PATENT SPECIFICATION

(11) **EP 4 019 277 B1**
(45) Date of publication and mention of the grant of the patent: **08.11.2023**
(21) Application number: 21214650.0
(22) Date of filing: 15.12.2021
(51) Int. Cl.: B60C 7/14

(54) **NON-PNEUMATIC TIRE**
LUFTLOSER REIFEN
PNEU NON PNEUMATIQUE

(30) Priority: 28.12.2020 JP 2020219328
(43) Date of publication of application: 29.06.2022
(73) Proprietor: Toyo Tire Corporation, Itami-shi, Hyogo 664-0847 (JP)
(72) Inventor: TAHARA, Hiroshi, Hyogo, 664-0847 (JP)
(74) Representative: Müller-Boré & Partner Patentanwälte PartG mbB

(56) References cited:
- US-A1- 2019 070 902
- US-A1- 2019 070 903
- US-A1- 2019 070 904
- US-A1- 2019 070 905
- US-A1- 2019 184 748

## Description

### BACKGROUND OF THE INVENTION

### Field of the Invention

The present invention relates to a non-pneumatic tire.

### Related Art

In recent years, a non-pneumatic tire has been known for which the occurrence of punctures, etc. is not a problem (refer to, for example, Japanese Unexamined Patent Application, Publication No. 2017-218132). In general, a non-pneumatic tire has a structure in which a plurality of plate-shaped link parts arranged in the tire circumferential direction are connected between an outer annular portion and an inner annular portion provided concentrically inside the outer annular portion. The non-pneumatic tire deflects and deforms when subjected to a load from the vehicle by compressive force acting on the link parts provided in the contact area.
Patent Document 1: Japanese Unexamined Patent Application, Publication No. 2017-218132

Document US 2019/184748 A1 describes a non-pneumatic tire including an inner annular portion, an outer annular portion, and a plurality of connecting portions connecting the inner and outer annular portions to each other. The first and second connecting portions are arrayed along a tire circumferential direction. The first and second connecting portions have a plate thickness smaller than a plate width and have a plate thickness direction oriented to the tire circumferential direction. When "S" is a length in the tire width direction and "H" is a height in a tire radial direction in the first and second connecting portions, an inclination angle "K" of a centerline of each plate width of the first and second connecting portions to the tire width direction in intersecting portions of the first and second connecting portions when viewed from the tire circumferential direction satisfies a relationship of 30×(H/S)0.7 ≤ K ≤ 75×(H/S)0.7.

Document US 2019/070904 A1 describes a non-pneumatic tire including a support structure for supporting a load from a vehicle. The support structure includes an inner annular portion, an outer annular portion concentrically provided on an outer side of the inner annular portion, and a plurality of connecting portions which connect the inner annular portion and the outer annular portion to each other and are provided in a tire circumferential direction independently of one another, the plurality of connecting portions are configured such that elongated plate-like first connecting portions and elongated plate-like second connecting portions are arrayed along the tire circumferential direction, a plate thickness is smaller than a plate width, a plate thickness direction is oriented to the tire circumferential direction, and a plate thickness at a tire radial direction inner end coupled to the inner annular portion is larger than a plate thickness at a tire radial direction center portion.

Document US 2019/070905 A1 describes a non-pneumatic tire including a support structure for supporting a load from a vehicle. The support structure includes an inner annular portion, an outer annular portion concentrically provided outside the inner annular portion, and a plurality of connecting portions which connect the inner annular portion and the outer annular portion to each other and are provided in a tire circumferential direction independently of one another, and the plurality of connecting portions are configured such that elongated plate-like first connecting portions and elongated plate-like second connecting portions are arrayed along the tire circumferential direction, the first connecting portions being extended from one side in a tire width direction of the inner annular portion to other side in a tire width direction of the outer annular portion, and the second connecting portions being extended from other side.

Document US 2019/070902 A1 describes a non-pneumatic tire wherein, at least one of a first connecting portions extends in such fashion as to be directed from one side in a tire width direction of an inner annular portion to the other side in a tire width direction of an outer annular portion, at least one of a second connecting portions extends in such fashion as to be directed from the other side in the tire width direction of the inner annular portion to the one side in the tire width direction of the outer annular portion, such that, the at least one second connecting portion appears to intersect the at least one first connecting portion, and that a maximum dimension in a tire radial direction of at least one of the closed spaces is greater than or equal to a maximum dimension in the tire width direction of the at least one closed space.

Document US 2019/070903 A1 describes a non-pneumatic tire including a support structure for supporting a load from a vehicle. The support structure includes an inner annular portion, an outer annular portion concentrically provided on an outer side of the inner annular portion, and a plurality of connecting portions which connect the inner annular portion and the outer annular portion to each other and are provided in a tire circumferential direction independently of one another, the plurality of connecting portions are configured such that elongated plate-like first connecting portions and elongated plate-like second connecting portions are arrayed along the tire circumferential direction, an angle α and an angle β, the angles being formed by an inner circumferential surface of the outer annular portion and both side surfaces of each of the connecting portions, both surfaces facing the tire circumferential direction, are 75° or more and 120° or less.

### SUMMARY OF THE INVENTION

In such a non-pneumatic tire, the distance between link parts adjacent to each other in the tire circumferential direction is larger at the outer annular side and smaller at the inner annular side due to the circumferential length difference between the outer annular portion and the inner annular portion. Therefore, as the number of link parts increases, it becomes difficult to maintain the distance between adjacent link parts. On the other hand, when the link parts along the tire circumferential direction are made thinner on the inner annular portion side than on the outer annular portion side in order to maintain the distance between the adjacent link parts, the strength of the link parts differs between the connection sites with the outer annular portion and the connection sites with the inner annular portion, such that the durability of the link parts is lowered, and the link parts may break when the repeated stress while the tire is rolling is applied to the link parts. Therefore, conventional non-pneumatic tires address improving the strength of the connection sites between the inner annular portion and the link parts and improving the durability of the link parts while maintaining the distance between the adjacent link parts on the inner annular portion side.

The present invention has been made in view of the above problems, and an object thereof is to provide a non-pneumatic tire capable of improving the strength of connection sites between an inner annular portion and link parts, while maintaining a distance between adjacent link parts on an inner annular portion side, and improving the durability of the link parts.

The claimed invention is defined by the features set forth in the appended independent claim. Additional embodiments of the claimed invention are defined by the dependent claims.

According to an exemplary embodiment of the present invention, it is possible to provide a non-pneumatic tire capable of improving the strength of connection sites between an inner annular portion and link parts while maintaining a distance between adjacent link parts on an inner annular portion side, and improving the durability of the link parts.

### BRIEF DESCRIPTION OF THE DRAWINGS

FIG. 1 is a front view showing a non-pneumatic tire according to an exemplary embodiment of the present invention.
FIG. 2 is a cross-sectional view taken along the line A-A in FIG. 1. The embodiment of FIG. 2 is not encompassed by the wording of the claims but is considered as useful for understanding the invention.
FIG. 3 is a cross-sectional view taken along the line B-B in FIG. 2.
FIG. 4 is a diagram for explaining the thickness of a link part along a tire circumferential direction.
FIG. 5 is a cross-sectional view showing a link part of a non-pneumatic tire according to another exemplary embodiment of the present invention.
FIG. 6 is a cross-sectional view showing a link part of a non-pneumatic tire according to yet another exemplary embodiment of the present invention.

### DETAILED DESCRIPTION OF THE INVENTION

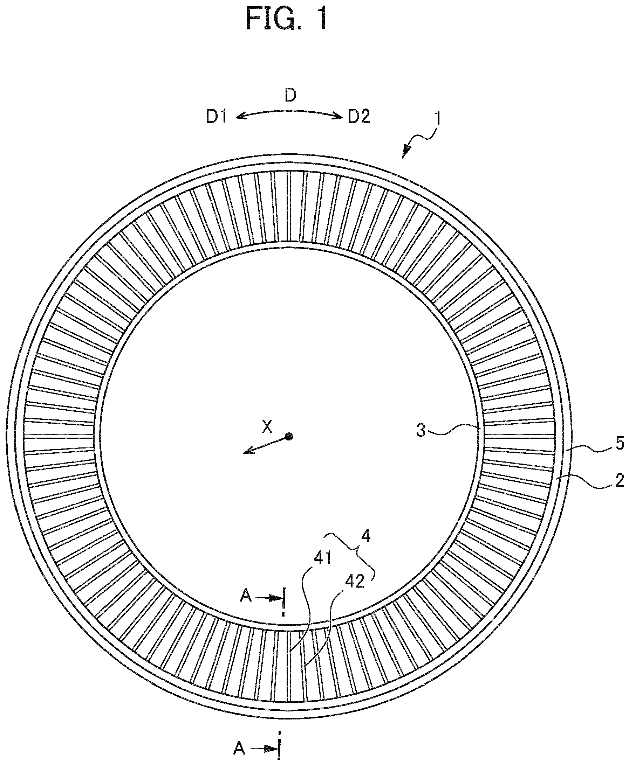

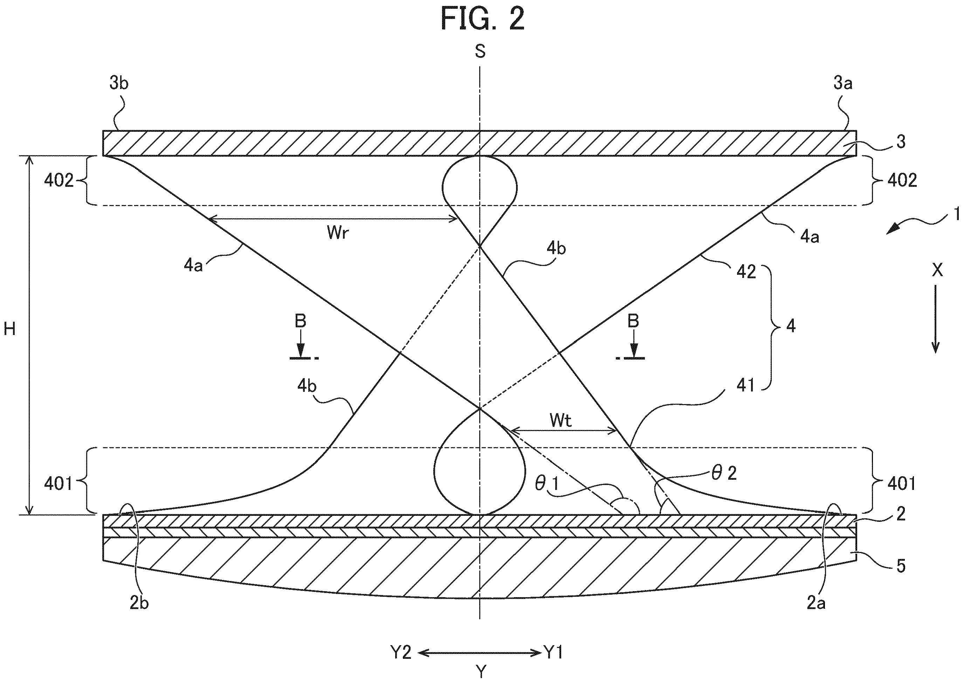

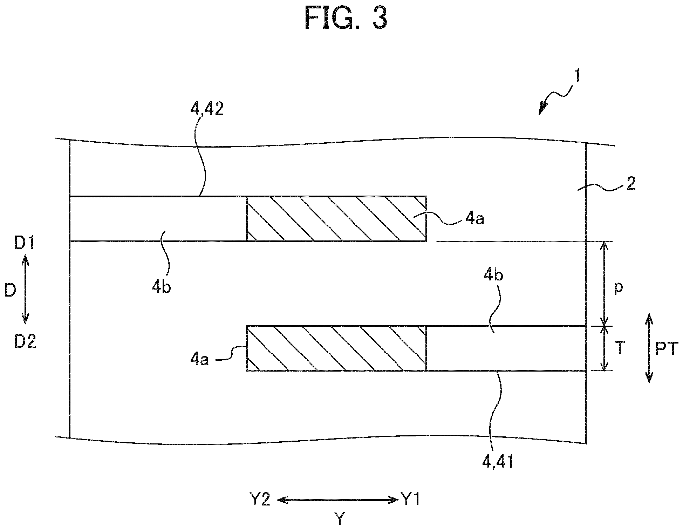

Exemplary embodiments of the present invention will be described below with reference to the drawings. FIG. 1 is a front view showing a non-pneumatic tire according to an exemplary embodiment of the present invention. FIG. 2 is a cross-sectional view taken along the line A-A in FIG. 1. FIG. 3 is a cross-sectional view taken along the line B-B in FIG. 2. A non-pneumatic tire 1 includes an outer annular portion 2, an inner annular portion 3 provided concentrically inside the outer annular portion 2, and a plurality of link parts 4 that each connect the outer annular portion 2 and the inner annular portion 3, and are provided independently along the tire circumferential direction D. The outer annular portion 2 has the outer periphery including a tread 5 provided thereon. The tread 5 is provided with a tread pattern similar to that of a conventional pneumatic tire.

First, the outer annular portion 2 and the inner annular portion 3 will be described. It should be noted that, in the following, the thicknesses of the outer annular portion 2 and the inner annular portion 3 each refer to the plate thickness in the direction along the tire radial direction X shown in FIGS. 1 and 2. The widths of the outer annular portion 2 and the inner annular portion 3 each refer to the width in the direction along the tire width direction Y shown in FIG. 2.

The outer annular portion 2 has a constant thickness in the circumferential direction and the width direction from the viewpoint of improving the uniformity. The thickness of the outer annular portion 2 is not particularly limited; however, from the viewpoint of reducing weight and improving durability while sufficiently transmitting the force from the link parts 4, it is preferable that the thickness of the outer annular portion 2 is 2% or more and 7% or less, and more preferably 2% or more and 5% or less, of the tire cross-sectional height H shown in FIG. 2.

The inner diameter of the outer annular portion 2 is appropriately determined in accordance with the application or the like. For example, when assuming substitution of general pneumatic tires, the inner diameter of the outer annular portion 2 may be 420 mm or more and 750 mm or less.

The width of the outer annular portion 2 is appropriately determined in accordance with the application or the like. For example, when assuming substitution of general pneumatic tires, the width of the outer annular portion 2 may be 100 mm or more and 300 mm or less.

The inner annular portion 3 has a constant thickness in the circumferential direction and the width direction from the viewpoint of improving the uniformity. Although not shown, the inner circumferential surface of the inner annular portion 3 may include irregularities or the like for retaining the fitting property for mounting with the axle and rim. The thickness of the inner annular portion 3 is not particularly limited; however, from the viewpoint of improving the weight reduction and durability while sufficiently transmitting a force to the link parts 4, it is preferable that the thickness of the inner annular portion 3 be 2% or more and 7% or less, and more preferably 3% or more and 6% or less, of the tire cross-sectional height H shown in FIG. 2.

The inner diameter of the inner annular portion 3 is appropriately determined in accordance with the dimensions and the like of the rim and the axle to which the non-pneumatic tire 1 is mounted. For example, when assuming the substitution of general pneumatic tires, the inner diameter of the inner annular portion 3 may be 250 mm or more and 500 mm or less.

The width of the inner annular portion 3 is appropriately determined according to the application, the length of the axle, and the like. For example, when assuming substitution of general pneumatic tires, the width of the inner annular portion 3 may be 100 mm or more and 300 mm or less.

The link parts 4 are each a member serving as a spoke in the non-pneumatic tire 1 and connecting the outer annular portion 2 and the inner annular portion 3 so as to maintain a constant interval. The plurality of link parts 4 are independently arranged at regular intervals along the tire circumferential direction D. As shown in FIG. 1, the plurality of link parts 4 extend linearly in the radial direction along the tire radial direction X when the non-pneumatic tire 1 is viewed in the unloaded state from the front direction along the tire rotation axis.

The link part 4 is made of an elastic material. Elastic material refers to, for example, a material in which tensile modulus calculated from the tensile stress at 10% elongation is 100 MPa or less when subjected to a tensile test in accordance with JIS K7321. More specifically, from the viewpoint of imparting moderate stiffness while maintaining adequate durability, it is preferable that the tensile modulus is 5 MPa or more and 100 MPa or less, and more preferably 7 MPa or more and 50 MPa or less.

Examples of the elastic material used as the base material of the link part 4 include thermoplastic elastomers, crosslinked rubbers, and other resins.

Examples of the thermoplastic elastomer include polyester elastomer, polyolefin elastomer, polyamide elastomer, polystyrene elastomer, polyvinyl chloride elastomer, and polyurethane elastomer.

As the rubber material constituting the crosslinked rubber, any natural rubber and synthetic rubber can be used. Examples of the synthetic rubber include styrene butadiene rubber (SBR), butadiene rubber (BR), isoprene rubber (IIR), nitrile rubber (NBR), hydrogenated nitrile rubber (hydrogenated NBR), chloroprene rubber (CR), ethylene propylene rubber (EPDM), fluororubber, silicon rubber, acrylic rubber, and urethane rubber. Two or more of these rubber materials may be used in combination if necessary.

Examples of other resins include thermoplastic resins and thermosetting resins. Examples of the thermoplastic resin include polyethylene resins, polystyrene resins, and polyvinyl chloride resins. The thermosetting resins include, for example, epoxy resins, phenolic resins, polyurethane resins, silicon resins, polyimide resins, and melamine resins.

Among the above-mentioned elastic materials, a polyurethane resin is preferably used for the link parts 4 from the viewpoint of molding, processability and cost. It should be noted that a foam material can also be used as the elastic material. In other words, those obtained by foaming the above-mentioned thermoplastic elastomer, crosslinked rubber, or other resins can be used. Furthermore, when the outer annular portion 2 and the inner annular portion 3 are made of resin, the link parts 4 may be formed integrally with the outer annular portion 2 and the inner annular portion 3 using the same resin material.

The plurality of link parts 4 are configured such that a first link part 41 and a second link part 42 are alternately arranged along the tire circumferential direction D. As shown in FIG. 2, the first link part 41 extends from one side Y1 in the tire width direction Y of the outer annular portion 2 toward the other side Y2 in the tire width direction Y of the inner annular portion 3. The second link part 42 extends from the other side Y2 in the tire width direction Y of the outer annular portion 2 toward the one side Y1 in the tire width direction Y of the inner annular portion 3. The first link part 41 and the second link part 42 adjacent to each other in the tire circumferential direction D are arranged so as to intersect in a substantially X-shape, when viewed in the tire circumferential direction D. The first link part 41 and the second link part 42 as viewed in the tire radial direction X are parallel or substantially parallel to the tire width direction Y, and extend in a direction perpendicular or substantially perpendicular to the tire equatorial plane S.

As shown in FIG. 2, the first link part 41 and the second link part 42 as viewed from the tire circumferential direction D have the same shape, and are symmetrical with respect to the tire equatorial plane S. Therefore, the specific shape of each link part 4 will be described using the first link part 41. It should be noted that the tire equatorial plane S refers to a plane perpendicular or substantially perpendicular to the tire rotation axis (tire meridian), and a plane located at the center in the tire width direction Y.

The link part 4 has an elongated plate shape extending obliquely toward the inner annular portion 3 from the outer annular portion 2. As shown in FIGS. 2 and 3, the link part 4 has a plate width W (Wr, Wt) which is smaller than the plate thickness T, and the plate thickness direction PT is along the tire circumferential direction D. That is, the link part 4 has a plate shape extending in the tire radial direction X and the tire width direction Y. It should be noted that the plate thickness T of the link part 4 refers to the thickness of the link part 4 along the tire circumferential direction D. The plate width W of the link part 4 refers to a width of the link part 4 in the direction along the tire width direction Y. The link part 4 has such an elongated plate shape that, even in a case of a thin plate thickness T, it is still possible to improve the durability of the link part 4 having the thin plate thickness T by setting a wide plate width W. Furthermore, by increasing the number of the first link parts 41 and the second link parts 42 while reducing the plate thickness T, it is possible to reduce the gap between the link parts 4 and 4 adjacent to each other in the tire circumferential direction D while maintaining the rigidity of the entire tire. This makes it possible to reduce the ground pressure dispersion while the tire is rolling. Further detailed configuration of the plate thickness T and the plate width W of the link part 4 will be described later.

As shown in FIG. 2, the link part 4 has a shape in which a connecting portion 401 with the outer annular portion 2 and a connecting portion 402 with the inner annular portion 3 gently spread along the tire width direction Y, respectively. The connecting portion 401 with the outer annular portion 2 of the first link part 41 is provided over a half area of the outer annular portion 2 in the tire width direction.

That is, the one side Y1 of the connecting portion 401 of the first link part 41 extends to an end portion 2a of the one side Y1 of the outer annular portion 2. The other side Y2 of the connecting portion 401 of the first link part 41 extends to the tire equatorial plane S disposed in the middle of the outer annular portion 2 in the tire width direction. The other side Y2 of the connecting portion 401 of the first link part 41 extends to an end portion 3b of the other side Y2 of the inner annular portion 3. The one side Y1 of the connecting portion 402 of the first link part 41 extends to the tire equatorial plane S disposed in the middle of the inner annular portion 3 in the tire width direction.

Similarly, the other side Y2 of the connecting portion 401 of the second link part 42 extends to an end portion 2b of the other side Y2 of the outer annular portion 2. The one side Y1 of the connecting portion 401 of the second link part 42 extends to the tire equatorial plane S disposed in the middle of the outer annular portion 2 in the tire width direction. The one side Y1 of the connecting portion 402 of the second link part 42 extends to an end portion 3a of the one side Y1 of the inner annular portion 3. The other side Y2 of the connecting portion 402 of the second link part 42 extends to the tire equatorial plane S disposed in the middle of the tire width direction of the inner annular portion 3.

The pitch p between the first link part 41 and the second link part 42 adjacent to each other in the tire circumferential direction D is preferably constant and small in the tire circumferential direction D. More specifically, the pitch p is preferably 1 mm or more and 10 mm or less, and more preferably 1 mm or more and 5 mm or less. When the pitch p is greater than 10 mm, the ground pressure tends to become uneven in the tire circumferential direction D, and the vehicle external sound may be generated.

The number of the link parts 4 provided in the non-pneumatic tire 1 is preferably 80 or more and 300 or less, and more preferably 100 or more and 200 or less from the viewpoint of the improvement in weight reduction, power transmission, and durability while sufficiently supporting the load from the vehicle. FIG. 1 shows an example in which 50 pieces of first link parts 41 and 50 pieces of second link parts 42 are provided.

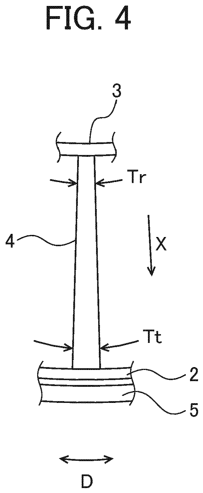

As shown in FIG. 4, the plate thickness T of the link part 4 differs between in the vicinity of the outer annular portion 2 and in the vicinity of the inner annular portion 3. More specifically, the plate thickness T of the link part 4 is smaller toward the inner annular portion 3 of the plate thickness Tr than the plate thickness Tt of the outer annular portion 2. Therefore, even when the plate thickness of the link part 4 becomes large as a whole, or even when increasing the number of link parts 4 along the tire circumferential direction D, it is possible to maintain the distance between the link parts 4 and 4 adjacent to each other in the tire circumferential direction D in the inner annular portion 3. The plate thicknesses Tt and Tr are not limited specifically; however, for example, the plate thickness Tt of the link part 4 in the vicinity of the outer annular portion 2 may be, for example, 18% or more and 22% or less of the tire cross-sectional height H, and the plate thickness Tr in the vicinity of the inner annular portion 3 of the link part 4 may be, for example, 13% or more and 17% or less of the tire cross-sectional height H.

As shown in FIG. 2, the plate width W of the link part 4 differs between the vicinity of the outer annular portion 2 and the vicinity of the inner annular portion 3. More specifically, in relation to the plate width W of the link part 4, the plate width Wr in the vicinity of the inner annular portion 3 is larger than the plate width Wt in the vicinity of the outer annular portion 2. Therefore, even when the plate thickness Tr in the vicinity of the inner annular portion 3 is smaller than the plate thickness Tt in the vicinity of the outer annular portion 2, it is still possible to reduce the difference in the respective cross-sectional areas when the link part 4 is cut in a plane perpendicular or substantially perpendicular to the tire radial direction X in the vicinity of the outer annular portion 2 and in the vicinity of the inner annular portion 3. This makes it possible to improve the strength of the connection sites between the inner annular portion 3 and the link part 4 in the vicinity of the inner annular portion 3 at which the plate thickness Tr becomes small, and to improve the durability of the link part 4.

It should be noted that the plate width Wt in the vicinity of the outer annular portion 2 and the plate width Wr in the vicinity of the inner annular portion 3 of the link part 4 each refer to a plate width of the portion to be deflected, and refer to a plate width at a position as close as possible to the outer annular portion 2 and the inner annular portion 3 when a load is applied to the link part 4. As shown in FIG. 2, when the connecting portion 401 between the link part 4 and the outer annular portion 2, and the connecting portion 402 between the link part 4 and the inner annular portion 3 each have a shape extending in the tire width direction Y, the plate width Wt in the vicinity of the outer annular portion 2 of the link part 4 is located closer to the inner annular portion 3 than the connecting portion 401, and refers to a portion adjacent to the connecting portion 401. This portion is located in the vicinity of the outer annular portion 2 relative to the position which is half of the tire cross-sectional height H. Furthermore, the plate width Wr of the link part 4 in the vicinity of the inner annular portion 3 is located closer to the outer annular portion 2 than the connecting portion 402, and refers to a width of a portion adjacent to the connecting portion 402. This portion is located in the vicinity of the inner annular portion 3 relative to the position which is half of the tire cross-sectional height H.

The plate width W of the link part 4 shown in FIG. 2 gradually increases toward the inner annular portion 3 from the outer annular portion 2. More specifically, an inner line 4a and an outer line 4b in the tire width direction Y in the link part 4 are provided so as to extend in the tire width direction Y at a constant ratio from the vicinity of the connecting portion 401 with the outer annular portion 2 toward the vicinity of the connecting portion 402 with the inner annular portion 3. With such a configuration, it is possible to make the cross-sectional area of the link part 4 substantially uniform over the entire tire cross-sectional height H.

It should be noted that, when viewing the link part 4 extending obliquely from the outer annular portion 2 toward the inner annular portion 3 in the tire circumferential direction D, as shown in FIG. 2, the inner line 4a is defined as a line making the intersection angle θ1 between the outer annular portion 2 and the inner line 4a to be an obtuse angle, and the outer line 4b is defined as a line making the intersection angle θ2 between the outer annular portion 2 and the outer line 4b to be an acute angle. Therefore, in the first link part 41 shown in FIG. 2, the inner line 4a is a line of the other side Y2 in the tire width direction Y, and the outer line 4b is a line of the one side Y1 in the tire width direction Y. In the second link part 42, the inner line 4a is a line of the one side Y1 in the tire width direction Y, and the outer line 4b is a line of the other side Y2 in the tire width direction Y.

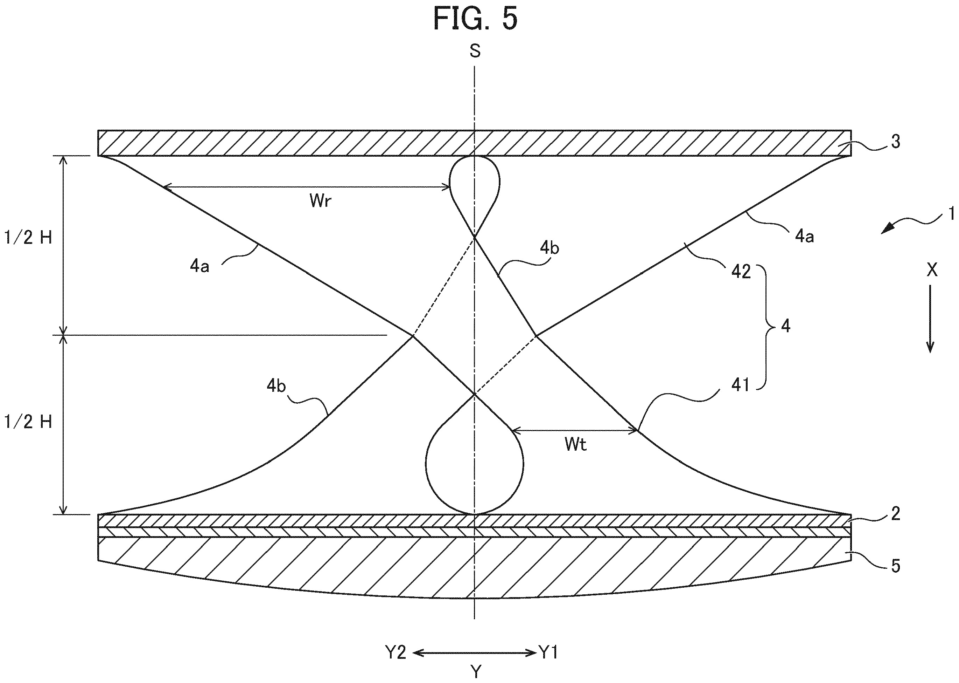

As shown in FIG. 5, the plate width W of the link part 4 may gradually increase from the middle portion in the tire radial direction X in the link part 4 toward the inner annular portion 3. In the link part 4 shown in FIG. 5, while the plate width Wt in the vicinity of the outer annular portion 2 with respect to the position which is half of the tire cross-sectional height H is a constant width, the plate width Wr in the vicinity of the inner annular portion 3 with respect to the position which is half of the tire cross-sectional height H increases toward the inner annular portion 3 with respect to the position which is half of the tire cross-sectional height H. With such a configuration, it is possible to prevent breakage of the link part 4 in the vicinity of the inner annular portion 3 without impairing the ease of deformation of the link part 4 in the vicinity of the outer annular portion 2.

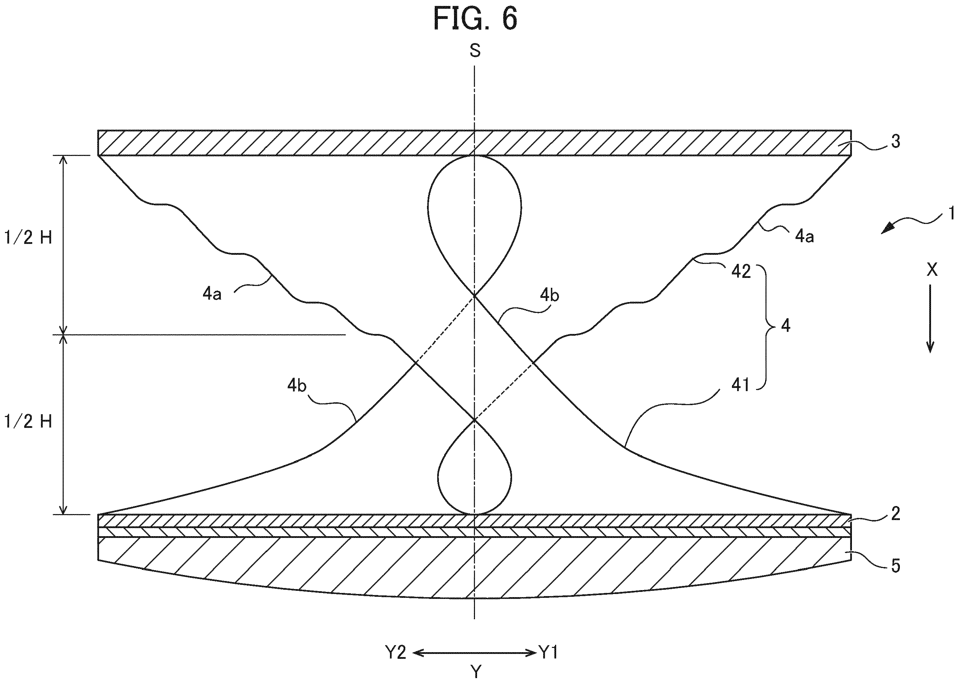

As shown in FIG. 6, the plate width W of the link part 4 may gradually increase from the vicinity of the outer annular portion 2 toward the vicinity of the inner annular portion 3. In the link part 4 shown in FIG. 6, by only the inner line 4a in the vicinity of the inner annular portion 3 being formed in a stepped shape with respect to the position which is half of the tire cross-sectional height H, the plate width Wr of the link part 4 in the vicinity of the inner annular portion 3 increases stepwise. However, the outer line 4b may also be formed in a stepped manner. In addition, the plate width W of the link part 4 may increase in a stepwise manner by forming the inner line 4a and the outer line 4b of the link part 4 in a stepwise manner over the entire tire cross-sectional height H.

It should be noted that the method of increasing the plate width Wr of the link part 4 in the vicinity of the inner annular portion 3 is not limited to those for changing the angle and shape of both the inner line 4a and the outer line 4b of the link part 4, and may change the angle and shape of only one of the inner line 4a and the outer line 4b. For example, in FIG. 6, by the inner line 4a being formed in a stepped shape without changing the shape of the outer line 4b of the link part 4, the plate width Wr of the link part 4 in the vicinity of the inner annular portion 3 is formed larger. On the contrary, the plate width Wr of the link part 4 in the vicinity of the inner annular portion 3 may be formed to be large without changing the shape of the inner line 4a of the link part 4.

According to the non-pneumatic tire 1 of the present exemplary embodiments, the following advantageous effects are obtained.

According to the non-pneumatic tire as set forth in the appended independent claim, it is possible to maintain the distance between the link parts 4 and 4 adjacent to each other in the vicinity of the inner annular portion 3 in the tire circumferential direction D, even when the plate thickness T of the link part 4 increases as a whole, or the number of link parts 4 along the tire circumferential direction D increases. Furthermore, even when the plate thickness Tr in the vicinity of the inner annular portion 3 is smaller than the plate thickness Tt in the vicinity of the outer annular portion 2, it is still possible to reduce the difference in the respective cross-sectional areas when the link part 4 is cut in a plane perpendicular or substantially perpendicular to the tire radial direction X in the vicinity of the outer annular portion 2 and in the vicinity of the inner annular portion 3. This makes it possible to improve the strength of the connection sites between the inner annular portion 3 and the link part 4 at which the plate thickness Tr becomes small, and to improve the durability of the link part 4.

(3) With a non-pneumatic tire further comprising the additional features of claim 2 it is possible to prevent breakage of the link parts 4 in the vicinity of the inner annular portion 3 without impairing the ease of deformation of the link parts 4 in the vicinity of the outer annular portion 2.

### EXPLANATION OF REFERENCE NUMERALS

1 non-pneumatic tire
2 outer annular portion
3 inner annular portion
4 link part
41 first link part
42 second link part
5 tread
D tire circumferential direction
T plate thickness
Tt plate thickness in the vicinity of outer annular portion
Tr plate thickness in the vicinity of inner annular portion
W plate width
Wt plate width in the vicinity of outer annular portion
Wr plate width in the vicinity of inner annular portion
X tire radial direction
Y tire width direction
Y1 one side
Y2 other side

## Claims

1. A non-pneumatic tire (1) comprising:
an outer annular portion (2) having an outer periphery including a tread (5) provided thereon;
an inner annular portion (3) provided inside the outer annular portion (2); and
a plurality of link parts (4) that each connect the outer annular portion (2) and the inner annular portion (3), and are provided along a tire circumferential direction (D),
wherein the plurality of link parts (4) include first link parts (41) and second link parts (42) that are alternately provided along the tire circumferential direction (D), the first link parts (41) each extending from one side (Y1) in a tire width direction (Y) of the outer annular portion (2) toward one other side (Y2) in the tire width direction (Y) of the inner annular portion (3), the second link parts (42) each extending from the other side (Y2) in the tire width direction (Y) of the outer annular portion (2) toward the one side (Y1) in the tire width direction (Y) of the inner annular portion (3),
wherein the plurality of link parts (4) each have a thickness (T) in the tire circumferential direction (D) which decreases continuously from the outer annular portion (2) toward the inner annular portion (3),
wherein the plurality of link parts (4) each have a first connecting portion (401) with the outer annular portion (2) and a second connecting portion (402) with the inner annular portion (3),
wherein in the second connecting portion (402) the width of each link part (4) decreases from a contact end of each of the link parts (4) with the inner annular portion (3) to a radial outer end of the second connecting portion (402),
wherein in the first connecting portion (401) the width of each link part (4) decreases from a contact end of each of the link parts (4) with the outer annular portion (2) to a radial inner end of the first connecting portion (401),
wherein the width (Wt) of each of the plurality of link parts (4) is constant from a position which is half of the tire cross-sectional height (H) up to the radial inner end of the first connecting portion (401),
**characterized in that**
a width (Wr) of each of the plurality of link parts (4) increases from a position which is half of the tire cross-sectional height (H) up to the radial outer end of the second connecting portion (402).

2. The non-pneumatic tire (1) according to claim 1, wherein the width (Wr) of each of the plurality of link parts (4) increases gradually or in a stepwise manner from the position which is half of the tire cross-sectional height (H) up to the radial outer end of the second connecting portion (402).

## Patentansprüche

1. Nichtpneumatischer Reifen (1), aufweisend:
einen äußeren ringförmigen Abschnitt (2), der einen Außenumfang aufweist, der eine daran vorgesehene Lauffläche (5) aufweist;
einen inneren ringförmigen Abschnitt (3), der im Inneren des äußeren ringförmigen Abschnitts (2) vorgesehen ist; und
eine Vielzahl von Verknüpfungsteilen (4), die jeweils den äußeren ringförmigen Abschnitt (2) und den inneren ringförmigen Abschnitt (3) verbinden und entlang einer Reifenumfangsrichtung (D) vorgesehen sind,
wobei die Vielzahl von Verknüpfungsteilen (4) erste Verknüpfungsteile (41) und zweite Verknüpfungsteile (42) aufweist, die abwechselnd entlang der Reifenumfangsrichtung (D) vorgesehen sind, wobei sich die ersten Verknüpfungsteile (41) jeweils von einer Seite (Y1) in einer Reifenbreiterichtung (Y) des äußeren ringförmigen Abschnitts (2) zu einer anderen Seite (Y2) in der Reifenbreiterichtung (Y) des inneren ringförmigen Abschnitts (3) erstrecken, sich die zweiten Verknüpfungsteile (42) jeweils von der anderen Seite (Y2) in der Reifenbreiterichtung (Y) des äußeren ringförmigen Abschnitts (2) zu der einen Seite (Y1) in der Reifenbreiterichtung (Y) des inneren ringförmigen Abschnitts (3) erstrecken,
wobei die Vielzahl von Verknüpfungsteilen (4) jeweils eine Dicke (T) in der Reifenumfangsrichtung (D) aufweist, die vom äußeren ringförmigen Abschnitt (2) zum inneren ringförmigen Abschnitt (3) kontinuierlich abnimmt,
wobei die Vielzahl von Verknüpfungsteilen (4) jeweils einen ersten Verbindungsabschnitt (401) mit dem äußeren ringförmigen Abschnitt (2) und einen zweiten Verbindungsabschnitt (402) mit dem inneren ringförmigen Abschnitt (3) aufweist,
wobei die Breite jedes Verknüpfungsteils (4) im zweiten Verbindungsabschnitt (402) von einem Kontaktende jedes der Verknüpfungsteile (4) mit dem inneren ringförmigen Abschnitt (3) zu einem radialen äußeren Ende des zweiten Verbindungsabschnitts (402) abnimmt,
wobei die Breite jedes Verknüpfungsteils (4) im ersten Verbindungsabschnitt (401) von einem Kontaktende jedes der Verknüpfungsteile (4) mit dem äußeren ringförmigen Abschnitt (2) zu einem radialen inneren Ende des ersten Verbindungsabschnitts (401) abnimmt,
wobei die Breite (Wt) jedes der Vielzahl von Verknüpfungsteilen (4) von einer Position, die die Hälfte der Reifenquerschnittshöhe (H) beträgt, bis zum radialen inneren Ende des ersten Verbindungsabschnitts (401) konstant ist,
**dadurch gekennzeichnet, dass**
eine Breite (Wr) jedes der Vielzahl von Verknüpfungsteilen (4) von einer Position, die die Hälfte der Reifenquerschnittshöhe (H) beträgt, bis zum radialen äußeren Ende des zweiten Verbindungsabschnitts (402) zunimmt.

2. Nichtpneumatischer Reifen (1) nach Anspruch 1, wobei die Breite (Wr) jedes der Vielzahl von Verknüpfungsteilen (4) von der Position, die die Hälfte der Reifenquerschnittshöhe (H) beträgt, bis zum radialen äußeren Ende des zweiten Verbindungsabschnitts (402) allmählich oder schrittweise zunimmt.

## Revendications

1. Pneu sans air (1) comprenant :
une partie annulaire externe (2) comportant une périphérie externe comprenant une bande de roulement (5) disposée sur elle ;
une partie annulaire interne (3) disposée à l'intérieur de la partie annulaire externe (2) ; et
une pluralité de pièces de liaison (4) reliant chacune la partie annulaire externe (2) et la partie annulaire interne (3), et étant disposées le long d'une direction circonférentiel (D) du pneu,
dans lequel
la pluralité de pièces de liaison (4) comprend des premières pièces de liaison (41) et des secondes pièces de liaison (42) disposées en alternance le long de la direction circonférentiel (D) du pneu, les premières pièces de liaison (41) s'étendant chacune à partir d'un premier côté (Y1), dans une direction transversale (Y) du pneu, de la partie annulaire externe (2) vers un autre côté (Y2), dans la direction transversale (Y) du pneu, de la partie annulaire interne (3), les secondes pièces de liaison (42) s'étendant chacune à partir de l'autre côté (Y2), dans la direction transversale (Y) du pneu, de la partie annulaire externe (2) vers le premier côté (Y1), dans la direction transversale (Y) du pneu, de la partie annulaire interne (3),
chaque pièce, parmi la pluralité de pièces de liaison (4), présente une épaisseur (T), dans la direction circonférentielle (D) du pneu, qui diminue en continu de la partie annulaire externe (2) vers la partie annulaire interne (3),
chaque pièce, parmi la pluralité de pièces de liaison (4), comporte une première partie de liaison (401) avec la partie annulaire externe (2) et une seconde partie de liaison (402) avec la partie annulaire interne (3),
dans la seconde partie de liaison (402), la largeur de chaque pièce de liaison (4) diminue à partir d'une extrémité de contact de chacune des pièces de liaison (4) avec la partie annulaire interne (3) vers une extrémité externe radiale de la seconde partie de liaison (402),
dans la première partie de liaison (401), la largeur de chaque pièce de liaison (4) diminue à partir d'une extrémité de contact de chacune des pièces de liaison (4) avec la partie annulaire externe (2) vers une extrémité interne radiale de la première partie de liaison (401),
la largeur (Wt) de chaque pièce, parmi la pluralité de pièces de liaison (4), est constante à partir d'une position qui est la moitié de la hauteur en section transversale (H) du pneu jusqu'à l'extrémité interne radiale de la première partie de liaison (401),
**caractérisé en ce que**
une largeur (Wr) de chaque pièce, parmi la pluralité de pièces de liaison (4), augmente à partir d'une position qui est la moitié de la hauteur en section transversale (H) du pneu jusqu'à l'extrémité externe radiale de la seconde partie de liaison (402).

2. Le pneu sans air (1) selon la revendication 1, dans lequel la largeur (Wr) de chaque pièce, parmi la pluralité de pièces de liaison (4), augmente progressivement ou de manière échelonnée à partir de la position qui est la moitié de la hauteur en section transversale (H) du pneu jusqu'à l'extrémité externe radiale de la seconde partie de liaison (402).
